# EUROPÄISCHE PATENTSCHRIFT

(11) **EP 2 039 582 B1**
(45) Veröffentlichungstag und Bekanntmachung des Hinweises auf die Patenterteilung: **23.08.2017**
(21) Anmeldenummer: 08015703.5
(22) Anmeldetag: 05.09.2008
(51) Int. Cl.: B61F 5/24, F16F 9/46, F16F 15/027, F16F 9/32

(54) **Aktiver hydraulischer Dämpfer und hydraulischer Stellantrieb**
Active hydraulic damper and hydraulic actuator
Amortisseur hydraulique actif et mécanisme de commande hydraulique

(30) Priorität: 21.09.2007 DE 202007013300 U
(43) Veröffentlichungstag der Anmeldung: 25.03.2009
(73) Patentinhaber: Liebherr-Transportation Systems GmbH & Co. KG, 2100 Korneuburg (AT)
(72) Erfinder: Gaile, Anton, 88299 Leutkirch (DE)
(74) Vertreter: Laufhütte, Dieter

(56) Entgegenhaltungen:
- DE-A1- 1 550 812
- DE-B3- 10 306 564
- JP-A- 2002 039 110
- US-A- 4 630 441

## Beschreibung

Die vorliegende Erfindung betrifft einen hydraulischen Stellantrieb, insbesondere in Form eines aktiven hydraulischen Dämpfers, insbesondere für schienengebundene Fahrzeuge.

Semiaktive Dämpfer, bei welchen die Dämpferkraft variiert wird, sind speziell im PKW-Bereich bereits weit verbreitet. Aktive Dämpfer, das heißt Dämpfer, welche selbst Kraft produzieren können und damit aktiv verfahrbar sind, versprechen gegenüber solchen semi-aktiven Systemen eine verbesserte Dämpfungswirkung. Dabei sind bereits aktive pneumatische Dämpfer bekannt, welche aufgrund ihrer niedrigen Grenzfrequenz von ca. 1 Hz jedoch keine hochdynamische Regelmöglichkeit bieten und damit keine optimale Dämpfung ermöglichen. Technisch ausgereifte hydraulische aktive Dämpfer standen bisher aber aufgrund der Komplexität der technischen Umsetzung nicht zur Verfügung. Insbesondere waren bisherige hydraulische Stellantriebe zu wenig dynamisch, zu aufwendig im Aufbau und in der Wartung und wiesen einen zu hohen Energieverbrauch auf.

Die DE 103 06 564 B3 offenbart dabei einen hydraulischen Stellantrieb, der die Merkmale des Oberbegriffs des Anspruchs 1 aufweist.

Aufgabe der vorliegenden Erfindung ist es daher, einen hochdynamischen hydraulischen Stellantrieb, insbesondere einen hochdynamischen aktiven hydraulischen Dämpfer zur Verfügung zu stellen, welcher kostengünstig hergestellt und betrieben werden kann. Als Grenzfrequenz des aktiven hydraulischen Dämpfers sollte vorteilhafterweise eine Frequenz von ca. 6 Hz erreichbar sein. Weiterhin sollte der Dämpfer auf Kraftregelung optimiert sein.

Erfindungsgemäß wird diese Aufgabe von einem hydraulischen Stellantrieb gemäß Anspruch 1 erfüllt.

Der aktive hydraulische Dämpfer der vorliegenden Erfindung, welcher insbesondere für schienengebundene Fahrzeuge eingesetzt wird, weist dabei einen Hydrozylinder, einen Elektromotor, ein Hydraulikreservoir, mindestens eine Pumpe und mindestens ein Steuerventil auf. Erfindungsgemäß sind dabei alle Komponenten des aktiven hydraulischen Dämpfers am Hydrozylinder angeordnet.

Dadurch, dass alle Komponenten des hydraulischen Systems direkt am Dämpfer angebaut sind, sind keine Schlauch- oder Rohrleitungen zwischen der Pumpeneinheit und dem Hydraulikzylinder und insbesondere zwischen dem Hydraulikzylinder und den Steuerventilen mehr nötig. Der erfindungsgemäße aktive hydraulische Dämpfer bietet damit folgende Vorteile:
a) Der Dämpfer weist eine wesentlich höhere hydraulische Steifigkeit gegenüber einer gesplitteten Bauweise auf, bei welcher die Hydraulikeinheit zur Druckerzeugung und zur Regelung über Rohre oder Schläuche mit dem Hydraulikzylinder in Verbindung steht, was ein wesentlich schnelleres ansprechen des erfindungsgemäßen Dämpfers und damit eine höhere Dynamik zur Folge hat.
b) Der benötigte Einbauraum und das Gewicht des aktiven Dämpfers sind sehr gering. Damit ist es oftmals sogar möglich, den aktiven Dämpfer im Einbauraum eines herkömmlichen passiven Dämpfers zu integrieren, wodurch sich der erfindungsgemäße aktive Dämpfer auch an bestehenden Fahrzeugen nachrüsten lässt.
c) Der Dämpfer ist extrem wartungsfreundlich, da er sich ohne spezielle Hydraulikkenntnisse austauschen lässt. Dabei müssen nur elektrische und mechanische Verbindungen gelöst werden, da alle Hydraulikkomponenten in den erfindungsgemäßen aktiven hydraulischen Dämpfer integriert sind.
d) Das Ölvolumen pro System ist gegenüber gesplitteten Systemen stark reduziert. Hierdurch ergeben sich wiederum Vorteile bezüglich der Kosten und eine einfachere Wartung.

Weiterhin ist der erfindungsgemäße aktive hydraulische Dämpfer mit zwei Pumpen ausgerüstet. Hierdurch ergibt sich eine verbesserte Regelbarkeit des aktiven hydraulischen Dämpfers, was zu einer verbesserten Dynamik führt. Vorteilhafterweise weist der Hydrozylinder dabei zwei Kolbenräume zur Bewegung in entgegengesetzte Richtungen auf. Dabei können die zwei Kolbenräume, wenn der aktive hydraulische Dämpfer mit zwei Pumpen ausgerüstet ist, jeweils getrennt von einer Pumpe mit Druck beaufschlagt werden. Hierdurch ergeben sich wiederum Vorteile bei der Regelung und der Dynamik. Insbesondere im Zusammenspiel mit dem am Hydrozylinder angebrachten Hydrauliksystem ergibt sich dabei ein hochdynamisches Dämpfersystem, welches dennoch mit nur geringem Energieverbrauch betrieben werden kann.

Zudem ist dabei jeder Kolbenraum des Hydraulikzylinders mit je einer Pumpe verbunden. Dabei können über die Hubvolumina der beiden Hydraulikpumpen Unterschiede in den Kolbenflächen (bei Zylindern mit unausgeglichenen Kolbenflächen) ausgeglichen werden, so dass gewährleistet ist, dass der Dämpfer sich in beiden Bewegungsrichtungen gleich schnell bewegen kann. Ein besonderer Vorteil besteht dabei insbesondere darin, dass für diesen Ausgleich weder Einstellpumpen noch eine elektronische Regelung des Pumpenantriebs benötigt wird. Bei Bedarf können selbstverständlich auch gewollte Unsymmetrien erzeugt werden.

Weiterhin wird der Druck in jedem Kolbenraum des Hydraulikzylinders getrennt gesteuert , nämlich über ein zugeordnetes Steuerventil. Hierdurch ergibt sich, insbesondere in Kombination mit den jeweils einem Kolbenraum zugeordneten Pumpen, eine besonders einfache Ansteuerung des aktiven hydraulischen Dämpfers.

Vorteilhafterweise handelt es sich bei den Steuerventilen dabei um Druckregelventile, insbesondere Proportional-Druckregelventile. Alternativ sind jedoch auch Anordnungen mit Wegregelventilen denkbar, wobei jedoch z. B. 2/2-Wege-Proportional-Druckregelventile z. B. in Vergleich zu 4/2-Druck/Wegeventilen einfacher, robuster (gegen Verschmutzung) und preiswerter sind und dennoch ein schnelles Ansprechverhalten garantieren.

Durch die Verwendung zweier getrennter Ventile besteht dabei zudem die Möglichkeit, beide Zylinderräume getrennt zu beeinflussen. In der Praxis bedeutet dies, dass z. B. der Symmetriedruck variiert werden kann, oder es besteht im Fehlerfall die Möglichkeit, beide Ventile mit einem Fixwert zu beaufschlagen, wodurch auf einfache Art eine Notdämpfung verwirklicht werden kann.

Vorteilhafterweise erfolgt die Regelung des Dämpfers daher mittels zweier Druckregelventile. Proportional-Druckregelventile bieten weiterhin den Vorteil, dass bei Überschreiten der eingestellten Kraftschwelle der Dämpfer automatisch, das heißt ohne dass die Regelung reagieren müßte, nachgibt. Dies ist speziell bei geregelten Dämpfern ein gewollter Effekt, weil hierdurch Kraftspitzen vermieden werden.

Weiterhin vorteilhafterweise stehen die Kolbenräume mit dem jeweiligen Hydraulikkreislauf an einer Stelle zwischen der Pumpe und dem Steuerventil in Verbindung. Dadurch, dass die Steuerventile zwischen den Zylinderräumen des Dämpfers und dem Reservoir angeordnet sind, ergibt sich die Möglichkeit, eine einfache Druckregelung bei permanenter Durchströmung der Steuerventile zu gewährleisten. Hierdurch ist ein schnelles Ansprechen des Dämpfers auf Regelsignale gewährleistet, da die Strömung nur angedrosselt werden muss und nicht erst erzeugt werden muss. Dies bedeutet zudem, dass zum Erreichen desselben Ansprechverhaltens im Vergleich zu einer konventionellen Volumenstromregelung wesentlich weniger Energie benötigt wird, da die Ölsäule nicht erst beschleunigt werden muss. Hierdurch lässt sich, insbesondere in Kombination mit Druckregelventilen, ein schnelles Ansprechverhalten gewährleisten.

Weiterhin vorteilhafterweise weisen die Kolbenräume jeweils einen getrennten Zu- und Abfluß auf. Hierdurch werden auch die Kolbenräume permanent durchströmt, wodurch ein permanenter Ölaustausch gewährleistet ist. Dies gewährleistet, dass Wärme und auch eventuell vorhandene Luft innerhalb kurzer Zeit aus dem Zylinderraum in den Speicher transportiert wird. Dies führt zu einer langen Öllebensdauer und einer guten Selbstentlüftung. Weiterhin trägt die permanente Durchströmung der Zylinderräume ebenfalls zum schnellen Ansprechen des Dämpfers auf Regelsignale bei, da hierdurch die gesamte Strömung durch den Hydraulikkreislauf bereits vorhanden ist und nur angedrosselt werden muss, anstatt erzeugt werden zu müssen.

Vorteilhafterweise steht dabei der Zufluß jedes Kolbenraums jeweils mit der Pumpe und der Abfluß mit dem Steuerventil in Verbindung oder ist mit diesem verbindbar. Hierdurch lässt sich die oben beschriebene permanente Beströmung der Zylinderräume realisieren.

Weiterhin vorteilhafterweise stehen die Kolbenräume jeweils über ein Rückschlagventil mit dem Hydraulikreservoir in Verbindung. Hierdurch kann das zur Regelung notwendige Fördervolumen der Pumpen stark reduziert werden, da der Hydrozylinder bei schnellen Bewegungen Öl aus dem Reservoir nachsaugen kann, ohne dass der notwendige Volumenstrom von den Hydraulikpumpen zur Verfügung gestellt werden muss. Durch das reduzierte Fördervolumen der Pumpen ergibt wiederum eine geringere Leistungsaufnahme, weniger Verlustleistung und weniger thermische Probleme.

Zudem kann durch die Nachsaugventile Kavitation im Kolbenraum unter allen Betriebsbedingungen sicher verhindert werden, da die Nachsaugventile einen Unterdruck in den Kolbenräumen verhindern.

Weiterhin vorteilhafterweise sind die Pumpen des erfindungsgemäßen aktiven hydraulischen Dämpfers Konstantpumpen, insbesondere Zahnradpumpen mit konstantem Hubvolumen. Hierdurch können Kosten und Bauraum gespart werden. Der Einsatz von Konstantpumpen ist dabei insbesondere durch die erfindungsgemäße Hydraulikregelung möglich, bei welcher jeder der Kolbenräume von je einer Pumpe mit Druck beaufschlagt wird und dieser Druck über Druckregelventile eingestellt wird.

Weiterhin vorteilhafterweise wird erfindungsgemäß nur ein Elektromotor zum Antrieb der beiden Pumpen eingesetzt. Auch hierdurch lassen sich wiederum Kosten und Bauraum einsparen. Alternativ können natürlich auch getrennte Elektromotore eingesetzt werden.

Vorteilhafterweise wird der Elektromotor dabei mit konstanter Drehzahl betrieben. Hierdurch wird keine Leistungselektronik benötigt, was zu geringen Kosten und erhöhter Zuverlässigkeit führt. Zudem sind die verwendeten Bauteile kostengünstig, verschleißarm und robust. Vorteilhafterweise handelt es sich bei dem Elektromotor dabei um einen ungeregelten Gleichstrommotor oder um einen ungeregelten Drehstrom-Asynchronmotor.

Eine besonders einfache Anordnung ergibt sich dabei insbesondere beim Einsatz eines ungeregelten Elektromotors, welcher zwei Hydraulikpumpen mit konstantem Hubvolumen antreibt. Hierdurch ergeben sich wiederum besondere Vorteile bezüglich der Zuverlässigkeit, Verschleißarmut und der Kosten.

Weiterhin vorteilhafterweise sind Drucksensoren zum Messen der Drücke in den Kolbenräumen vorgesehen. Die Drücke in den Kolbenräumen können dann zur Ansteuerung oder Regelung des erfindungsgemäßen Systems herangezogen werden.

Weiterhin vorteilhafterweise weist der erfindungsgemäße aktive hydraulische Dämpfer ein im Dämpfer integriertes Wegmesssystem auf. Vorteilhafterweise kann der Wegmesser dabei im Kolben des Hydrozylinders angeordnet sein. Durch die erfindungsgemäße Kraftregelung kann jedoch auch auf eine Wegmessung am Stellantrieb verzichtet werden, da diese für die Regelung nicht unbedingt benötigt wird.

Weiterhin vorteilhafterweise weist der erfindungsgemäße aktive hydraulische Dämpfer einen Beschleunigungssensor auf. Die Daten des Beschleunigungssensors können zur Ansteuerung des erfindungsgemäßen hydraulischen Dämpfers herangezogen werden.

Weiterhin vorteilhafterweise werden bei dem erfindungsgemäßen aktiven hydraulischen Dämpfer während des Betriebs die Kolbenräume und/oder die Steuerventile permanent von Hydraulikfluid durchströmt. Wie bereits weiter oben dargestellt, ist hierdurch ein permanenter Ölaustausch gewährleistet. Dies wirkt sich positiv auf die Öllebensdauer, die Selbstentlüftung sowie auf die Ansprechgeschwindigkeit des Dämpfers aus. Insbesondere muss durch die permanente Durchströmung des Zylinders und/oder der Steuerventile die Strömung nur angedrosselt werden und nicht erst erzeugt werden, so dass sich ein schnelles Ansprechen des Dämpfers auf Regelsignale ergibt. Zudem muss wesentlich weniger Energie als bei einer konventionellen Volumenstromregelung eingesetzt werden, da die Ölsäule nicht erst beschleunigt werden muss. Ein solcher Betrieb ist insbesondere durch den integrierten Aufbau des hydraulischen Dämpfers mit am Hydrozylinder angebautem Hydrauliksystem energiesparend umzusetzen, da aufgrund der sehr kurzen Wege und der hohen hydraulischen Steifigkeit nur geringe Strömungsverluste entstehen.

Weiterhin vorteilhafterweise liegt bei dem erfindungsgemäßen aktiven hydraulischen Dämpfer während des Betriebs immer mindestens einer der Kolbenräume auf Minimaldruck. Hierdurch wird im Gegensatz zu klassischen Steuerungen, welche mit Symmetriedruck (typischerweise Halbesystemdruck) arbeiten, erreicht, dass die zum Kraftaufbau benötigte Leistung und insbesondere die Verlustleistung stark reduziert wird. Dies ist besonders ausgeprägt, wenn nur geringe Leistungen bezogen auf die Maximalleistung benötigt werden, wie dies bei aktiven Dämpfersystemen oftmals der Fall ist.

Wenn eine Kolbenkammer immer Minimaldruck aufweist, hat dies zudem zur Folge, dass bei plötzlichen Änderungen der äußeren Kraft z. B. durch einen Stoß sich die Kräfte am Dämpfer nicht maßgeblich ändern, da im Gegensatz zu mit Symmetriedruck arbeitenden Systemen der Druck in der Kolbenkammer mit dem geringeren Druck nicht zusammenbricht, da dieser ja bereits bei fast Null liegt. Hierdurch wird ohne ein Eingreifen der Regelung verhindert, dass sich Druckstöße durch schnelle Laständerung über den Dämpfer übertragen können. Hierdurch ergibt sich eine wesentlich bessere Isolationswirkung des Dämpfers.

Vorteilhafterweise wird hierzu während des Betriebs des erfindungsgemäßen aktiven hydraulischen Dämpfers immer maximal eines der beiden Steuerventile angesteuert. Hierdurch ergibt sich, dass eine der Kolbenkammern immer Minimaldruck aufweist, welcher z. B. durch den minimalen Einstelldruck des Proportional-Ventils und die Strömungsverluste bestimmt ist. Hierdurch ergeben sich die bereits oben beschriebenen Vorteile einer solchen Steuerung im Vergleich zu klassischen Steuerungen, welche mit Symmetriedruck arbeiten.

Vorteilhafterweise weist der erfindungsgemäße aktive hydraulische Dämpfer dabei eine Steuerung zur Ansteuerung des Stellantriebs auf. Insbesondere kann durch diese Steuerung bzw. Regelung der aktive hydraulische Dämpfer wie oben dargestellt betrieben werden.

Weiterhin vorteilhafterweise weist der erfindungsgemäße Hydrozylinder ein zweistufiges Dichtungssystem mit einer Rücklaufentlastung zwischen Primär- und Sekundärdichtung auf. Dies ist ohne erhöhten Bauaufwand möglich, da der Hydraulikspeicher erfindungsgemäß am Hydrozylinder angebaut ist. Ein solches Dichtungssystem weist eine wesentlich höhere Lebensdauer gegenüber konventionellen Dichtungssystemen auf.

Weiterhin vorteilhafterweise ist erfindungsgemäß das Hydraulikreservoir um die Kolbenräume des Hydrozylinders angeordnet. Hierdurch ergeben sich extrem kurze Wege für die Hydraulikflüssigkeit und zudem eine besonders kompakte Bauweise.

Weiterhin vorteilhafterweise ist erfindungsgemäß der Antriebsmotor und/oder die Pumpe im Hydraulikreservoir angeordnet. Auch hierdurch ergibt sich eine besonders einfache und zuverlässige Anordnung.

Der erfindungsgemäße hochdynamische hydraulische Dämpfer wird dabei vorteilhafterweise bei Schienenfahrzeugen als Dämpfer eingesetzt. Er kann dabei für jede beliebige Dämpferfunktion wie z. B. Querdämpfer, Drehdämpfer oder Vertikaldämpfer am Fahrzeug eingesetzt werden. Ebenso sind Anwendungen des erfindungsgemäßen aktiven hydraulischen Dämpfers in Lastkraftwagen oder Personenkraftwagen denkbar.

Das erfindungsgemäße Hydraulikprinzip kann jedoch auch in anderen Bereichen vorteilhaft eingesetzt werden. Insbesondere kann es dazu verwendet werden, einen kostengünstigen, einfachen und robusten Stellantrieb für Neigetechniksysteme bereitzustellen.

Die vorliegende Erfindung umfasst daher weiterhin einen hydraulischen Stellantrieb, insbesondere für schienengebundene Fahrzeuge, insbesondere zur aktiven Neigungseinstellung, mit am Stellantrieb angeordneter Hydraulikversorgung, wobei der Stellantrieb zwei Pumpen und zwei Kolbenräume aufweist, und jeder der Kolbenräume des Stellantriebs jeweils getrennt mit einer der Pumpen verbunden oder verbindbar ist. Hierdurch ergeben sich wiederum die bereits oben beschriebenen Vorteile einer erheblich verbesserten Regelbarkeit und eines besonders guten Ansprechverhaltens, bei gleichzeitig günstigem Betrieb und kompakter Bauweise.

Die erfindungsgemäße Anordnung mit dem am Stellantrieb angeordneten Hydrauliksystem ist dabei im Zusammenspiel mit den zwei Pumpen, welche die zwei Kolbenräume mit Druck beaufschlagen, von besonderem Vorteil, da sich gerade hier die kurzen Hydraulikwege besonders bezahlt machen.

Die erfindungsgemäße Verwendung zweier Pumpen zur Beaufschlagung zweier Kolbenräume mit Druck ist jedoch auch unabhängig von der Anordnung der Hydraulikversorgung am Stellantrieb von großem Vorteil, so dass hierfür unabhängig Schutz beansprucht wird. Besondere Vorteile ergeben sich erfindungsgemäß dabei insbesondere dadurch, dass der Stellantrieb so angesteuert werden kann, dass in dem erfindungsgemäßen hydraulischen Stellantrieb immer eine der Druckkammern auf Minimaldruck liegt, so dass enorme Energieeinsparungen möglich sind.

Weiterhin vorteilhafterweise weisen die zwei Pumpen erfindungsgemäß ein konstantes Hubvolumen auf und werden von einem Elektromotor angetrieben, welcher mit konstanter Drehzahl läuft. Hierdurch ergibt sich ein ebenso robuster wie preisgünstiger und platzsparender Aufbau.

Vorteilhafterweise wird der Druck in den Kolbenräumen mittels zweier, den Kolbenräumen zugeordneter Druckregelventile geregelt. Dies ergibt, wie bereits oben beschrieben, ein hochdynamisches Ansprechverhalten bei gleichzeitig robuster und kostengünstiger Regelung. Insbesondere wird dabei erfindungsgemäß immer nur eines der Druckregelventile angesteuert, was zu den bereits oben beschriebenen Vorteilen führt.

Weiterhin weist der erfindungsgemäße hydraulische Stellantrieb vorteilhafterweise eines oder mehrere der Merkmale auf, welche bereits weiter oben bezüglich des aktiven hydraulischen Dämpfers beschrieben wurden. Hierdurch ergeben sich auch allgemein für hydraulische Stellantriebe die dort dargestellten Vorteile. Auf eine einzelne Darstellung der jeweiligen Merkmale wird deshalb bezüglich des hydraulischen Stellantriebs verzichtet und auf die Darstellung bezüglich des aktiven hydraulischen Dämpfers verwiesen.

Weiterhin vorteilhafterweise umfasst die vorliegende Erfindung die Verwendung des oben beschriebenen aktiven hydraulischen Dämpfers zur aktiven Dämpfung eines Fahrzeugs, insbesondere eines schienengebundenen Fahrzeugs. Die besonderen Vorteile einer solchen Verwendung insbesondere bei schienengebundenen Fahrzeugen wurden bereits dargestellt. Insbesondere durch die hohe Dynamik des erfindungsgemäßen Dämpfers ergibt sich dabei eine hervorragende Dämpfungswirkung, wobei der Dämpfer zusätzlich durch seine kleine Bauform leicht eingebaut bzw. nachgerüstet werden kann und einen besonders geringen Energieverbrauch aufweist.

Weiterhin umfasst die vorliegende Erfindung die Verwendung des hydraulischen Stellantriebs, welcher oben beschrieben wurde, in einem Neigetechniksystem eines schienengebundenen Fahrzeugs. Auch hier ergibt sich ein kostengünstiger, einfacher und robuster Stellantrieb.

Das erfindungsgemäße Aktuatorkonzept weist dabei eine Vielzahl von Vorteilen auf, welche noch einmal kurz dargestellt werden sollen:
- Das erfindungsgemäße Aktuatorkonzept erlaubt eine einfache Integration eines Wegaufnehmers, welcher zu Regelung- oder Überwachungszwecken eingesetzt werden kann.
- Das Aktuatorkonzept kann sowohl mit ausgeglichenen als auch mit unausgeglichenen Kolbenflächen ausgeführt werden.
- Das erfindungsgemäße Aktuatorkonzept ist sowohl für aktive hydraulische Dämpfer als auch für Neigetechniksysteme hervorragend geeignet.
- Das erfindungsgemäße Aktuatorkonzept bietet enorme Kostenvorteile gegenüber bestehenden Konzepten, wobei von Kostenvorteilen in Höhe von 50% ausgegangen wird.
- Es wird keine Leistungselektronik zur Ansteuerung benötigt, was zu Vorteilen bezüglich der Zuverlässigkeit, der Kosten und des Gewichts führt. Eine einfache Kontrollelektronik mit PWM- oder Stromausgang ist ausreichend.
- Durch die Kraftregelung kann der Regelkreis wesentlich einfacher aufgebaut werden, da durch die Kraftregelung ein Kraftkonflikt zwischen den beiden Stellantrieben eines Wagenkastens ausgeschlossen ist. Desweiteren ist es aufgrund der jeweils nur einseitigen Kraftwirkungsrichtung (eine Kolbenkammer weist immer Minimaldruck auf) ausgeschlossen, dass die beiden Stellantriebe eines Wagenkastens gegeneinander arbeiten.
- Durch die Kraftregelung kann auf eine Wegmessung am Stellantrieb auch verzichtet werden, da dieser für die Regelung nicht unbedingt benötigt wird, so dass ein Beschleunigungssensor am Wagenkasten ausreichend ist.
- Im Vergleich zu anderen hydraulischen Systemen bietet die vorliegende Erfindung durch die integrierte Bauweise enorme Vorteile bezüglich Wartung (keine hydraulischen Verbindungen), Gewicht (kein schweres Hydroaggregat), und Energieverbrauch.
- Im Fehlerfall wirkt der Hydrozylinder des erfindungsgemäßen aktiven hydraulischen Dämpfers als passiver Dämpfer.

Die vorliegende Erfindung wird nun anhand eines Ausführungsbeispiels sowie Zeichnungen näher erläutert. Dabei zeigen:
- Figur 1:: das Hydraulikkonzept eines Ausführungsbeispiels des erfindungsgemäßen hydraulischen Stellantriebs,
- Figur 2:: die konstruktive Ausführung des Ausführungsbeispiels des erfindungsgemäßen hydraulischen Stellantriebs in einer perspektivischen Darstellung und
- Figur 3:: eine mögliche Systemanordnung für die Querzentrierung unter Verwendung des Ausführungsbeispiels des erfindungsgemäßen hydraulischen Stellantriebs bei einem schienengebundenen Fahrzeug.

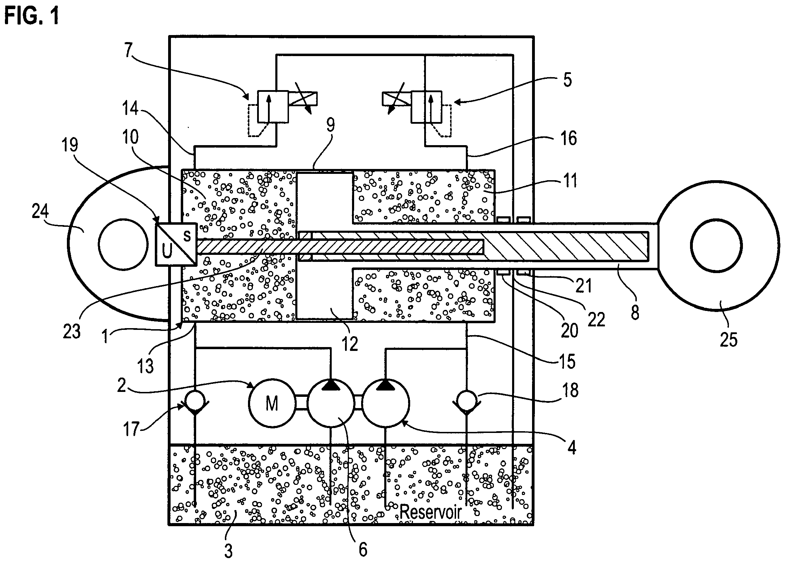

Figur 1 zeigt ein Ausführungsbeispiel des erfindungsgemäßen Stellantriebs, bei welchem alle Komponenten des Hydrauliksystems am Hydrozylinder 1 angeordnet sind. Der Hydrozylinder 1 ist dabei ein doppeltwirkender Zylinder mit einem Zylinderraum 9, einer einseitigen Kolbenstange 8 und ein im Zylinderraum beweglicher Kolben 12, welcher den Zylinderraum 9 in einen ersten Kolbenraum 10 und einen zweiten Kolbenraum 11 teilt. Durch Anlegen einer Druckdifferenz zwischen dem ersten Kolbenraum 10 und dem zweiten Kolbenraum 11 kann der Kolben je nach Vorzeichen der Druckdifferenz in entgegengesetzte Richtungen bewegt werden.

Weiterhin ist ein Wegmesssystem 19 vorgesehen, welches in den Hydrozylinder integriert ist, wobei die Wegmessstrecke 23 in einer Bohrung in der Kolbenstange 8 verläuft. Hierdurch kann die Bewegung des Kolbens erfasst werden, und damit die Stellung der zylinderseitigen Anlenkung 24 zur kolbenseitigen Anlenkung 25.

Alle Komponenten des erfindungsgemäßen hydraulischen Systems sind direkt am erfindungsgemäßen Stellantrieb angebaut, insbesondere die Motorpumpeinheit aus Motor 2 und Pumpen 4 und 6, das Reservoir 3 sowie die Steuerventile 5 und 7. Hierdurch wird keine Schlauch- oder Rohrverbindung zwischen der Pumpeneinheit und dem Hydraulikzylinder und insbesondere zwischen dem Hydraulikzylinder und den Steuerventilen benötigt. Der Stellantrieb weist hierdurch eine sehr hohe hydraulische Steifigkeit auf, was zu einem sehr schnellen Ansprechen des Stellantriebs und damit einer hohen Dynamik führt. Zudem ist der benötigte Einbauraum des Stellantriebs sehr gering. Auch ist der Stellantrieb extrem wartungsfreundlich, da er sich ohne spezielle Hydraulikkenntnisse austauschen lässt. Zudem ist das Ölvolumen gegenüber gesplitteten Systemen stark reduziert.

Weiterhin weist der erfindungsgemäße Hydraulikzylinder ein zweistufiges Dichtungssystem aus einer Primärdichtung 20 und einer Sekundärdichtung 21 auf, zwischen welchen eine Rücklaufentlastung 22 angeordnet ist, welche mit dem Hydraulikreservoir 3 in Verbindung steht. Da der Hydraulikspeicher direkt am Hydrozylinder angebaut ist, kann dieses zweistufige Dichtungssystem ohne erhöhten Bauaufwand realisiert werden. Es weist gegenüber konventionellen Dichtungssystemen eine wesentlich höhere Lebensdauer auf.

Das Ausführungsbeispiel des erfindungsgemäßen Stellantriebs weist weiterhin eine erste Pumpe 6 und eine zweite Pumpe 4 auf, welche den ersten Kolbenraum 10 und den zweiten Kolbenraum 11 jeweils getrennt mit Druck beaufschlagen. Die erste Pumpe 6 steht hierzu über eine Hydraulikleitung mit dem ersten Kolbenraum 10 in Verbindung und pumpt Hydraulikflüssigkeit aus dem Reservoir 3 in den ersten Kolbenraum 10. Die zweite Pumpe 4 steht über eine Hydraulikleitung mit dem zweiten Kolbenraum 11 in Verbindung und pumpt Hydraulikflüssigkeit aus dem Hydraulikreservoir 3 in den zweiten Kolbenraum 11. Die erste und die zweite Pumpe 6 und 4 werden von einem Motor 2 angetrieben, welcher im Ausführungsbeispiel als ungeregelter Drehstrom-Asynchron-Motor ausgeführt ist. Ebenso könnte jedoch auch ein ungeregelter Gleichstrommotor verwendet werden. Die beiden Hydraulikpumpen 6 und 4 sind beide als Hydraulikpumpen mit konstantem Hubvolumen ausgeführt. Sie weisen weiterhin nur eine Drehrichtung auf. Im Ausführungsbeispiel wurden hier Zahnradpumpen eingesetzt. Diese Ausführung der erfindungsgemäßen Motor-Pumpenanordnung hat den Vorteil, dass keine Leistungselektronik benötigt wird, was zu geringeren Kosten und einer erhöhten Zuverlässigkeit führt. Zudem sind die verwendeten Bauteile kostengünstig, verschleißarm und robust.

Die erste und die zweite Pumpe können dabei unterschiedliche Hubvolumina aufweisen, um Unterschiede in den Kolbenflächen des ersten Kolbenraums 10 und des zweiten Kolbenraums 11 auszugleichen. Hierdurch ist gewährleistet, dass der erfindungsgemäße Stellantrieb sich in beiden Bewegungsrichtungen gleich schnell bewegen kann. Bei Bedarf können selbstverständlich auch gewollte Unsymmetrien erzeugt werden.

Die Kolbenräume weisen dabei jeweils einen Zufluß und einen Abfluß auf. Die erste Pumpe 6 ist mit dem Zufluß 13 des ersten Kolbenraums 10 verbunden, während Hydraulikflüssigkeit aus dem Kolbenraum 10 über den Abfluß 14 wieder abfließt. Entsprechend ist die zweite Pumpe 4 mit dem zweiten Kolbenraum 11 über dessen Zufluß 15 verbunden, während Hydraulikflüssigkeit aus dem zweiten Kolbenraum 11 über dessen Abfluß 16 abfließt.

Die Zylinderräume werden permanent von Hydraulikflüssigkeit durchströmt, so dass ein permanenter Flüssigkeitsaustausch gewährleistet ist. Hierdurch wird Wärme und auch eventuell vorhandene Luft innerhalb kurzer Zeit aus den Kolbenräumen in das Reservoir 3 transportiert. Durch die permanente Durchströmung der Kolbenräume 10 und 11 ergibt sich ein besonders schnelles Ansprechen des erfindungsgemäßen Stellantriebs auf Regelsignale, da die Strömung nur angedrosselt werden muss und nicht erst erzeugt werden muss. Zudem wird weniger Energie benötigt, da die Ölsäule nicht erst beschleunigt werden muss.

Der Druck in dem ersten Kolbenraum 10 und dem zweiten Kolbenraum 11 kann dabei unabhängig voneinander geregelt werden, und zwar über ein erstes Steuerventil 7, welches dem ersten Kolbenraum 10 zugeordnet ist, sowie ein zweites Steuerventil 5, welches dem zweiten Kolbenraum 11 zugeordnet ist. Die Steuerventile 7 und 5 stehen dabei mit den Abflüssen 14 und 16 des ersten und des zweiten Kolbenraums in Verbindung und sind somit zwischen den Kolbenräumen und dem Reservoir 3 angeordnet. Bei den Steuerventilen 7 und 5 handelt es sich um einfache Druckregelventile, über welche der Druck in den Kolbenräumen 10 und 11 geregelt wird. Alternativ wären jedoch auch Wegregelventile denkbar.

Die in dem Ausführungsbeispiel verwendeten 2/2-Wege-Proportional-Druckregelventile sind im Vergleich zu 4/2-Druck/Wegeventilen einfach, robust gegen Verschmutzung und preiswert und garantieren dennoch ein schnelles Ansprechverhalten, insbesondere in Verbindung mit der permanenten Durchströmung der Ventile.

Durch die Verwendung zweier getrennter Ventile besteht zudem die Möglichkeit, die beiden Zylinderräume getrennt zu beeinflussen. Im Fehlerfall werden z.B. beide Ventile mit einem Fixwert beaufschlagt, um eine Notdämpfung zu verwirklichen.

Die verwendeten Proportional-Druckregelventile bieten den Vorteil, dass bei überschreiten der eingestellten Kraftschwelle der Stellantrieb automatisch nachgibt, ohne dass die Regelung reagieren muss, was speziell bei aktiv geregelten Dämpfern ein gewollter Effekt ist, um Kraftspitzen zu vermeiden.

Die erste Kolbenkammer 10 ist über ein erstes Rückschlagventil 17 mit dem Reservoir 3 verbunden, so dass das Rückschlagventil als Nachsaugventil arbeiten kann. Dementsprechend ist die zweite Kolbenkammer 11 über ein zweites Rückschlagventil 18 mit dem Reservoir 3 verbunden. Die Rückschlagventile sind dabei jeweils mit dem Zufluß 13 bzw. 15 der Kolbenräume verbunden. Hierdurch kann das zur Regelung notwendige Fördervolumen der Pumpen stark reduziert werden, da der Stellantrieb bei schnellen Bewegungen Öl aus dem Reservoir nachsaugen kann, ohne dass der notwendige Volumenstrom von den Pumpen 6 und 4 zur Verfügung gestellt werden muss. Insbesondere bei der Verwendung als Dämpfer ergeben sich hierdurch erhebliche Vorteile, wobei Kavitation in den Kolbenraum in den Kolbenraum verhindert wird.

Der erfindungsgemäße Stellantrieb weist weiterhin eine Steuerung auf, welche insbesondere das erste Steuerventil 7 und das zweite Steuerventil 5 ansteuert. Bei aktivierter Steuerung wird dabei immer nur eines der beiden Steuerventile angesteuert. Hierdurch wird im Gegensatz zu klassischen Steuerungen, welche mit einem Symmetriedruck arbeiten, erreicht, dass die zum Kraftaufbau benötigte Leistung und insbesondere die Verlustleistung stark reduziert wird. Insbesondere wenn über große Betriebsspannen nur geringe Leistungen bezogen auf die Maximalleistung benötigt werden, wie dies gerade bei der Verwendung des Stellantriebs in einem aktiven Dämpfersystem der Fall ist, können so die Energieverluste erheblich reduziert werden.

Dadurch, dass immer nur eines der Ventile 7 und 5 angesteuert ist, weist der Kolbenraum, welcher nicht angesteuert ist, immer Minimaldruck auf. Der Minimaldruck in dem jeweiligen Kolbenraum wird dabei durch den minimalen Einstelldruck des zugeordneten Proportionalventils und durch Strömungsverluste bestimmt. Dies hat den Vorteil, dass bei plötzlichen Änderungen der äußeren Kraft sich die Kräfte am Dämpfer nicht maßgeblich ändern, da im Gegensatz zu mit Symmetriedruck arbeitenden Systemen der Druck in der Kolbenkammer mit dem geringeren Druck nicht zusammenbricht, da er ja bereits bei fast Null liegt. Hierdurch wird verhindert, dass sich Druckstöße über den Stellantrieb übertragen können, so dass sich bei der Verwendung als Dämpfer eine wesentlich bessere Isolationswirkung ergibt, ohne dass hierzu die Regelung eingreifen müßte.

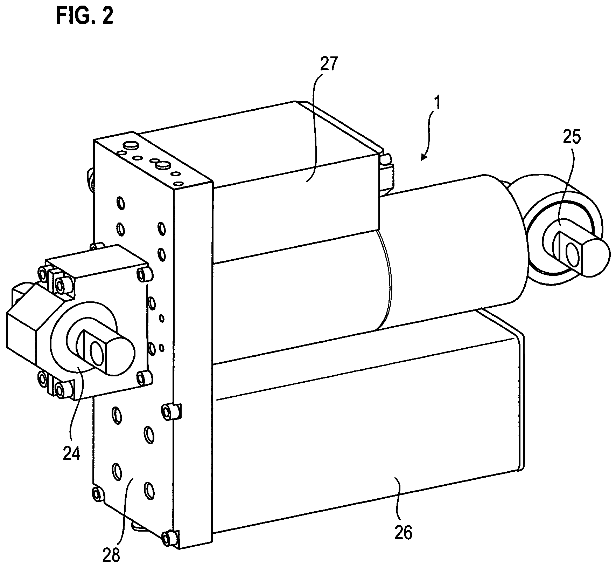

Figur 2 zeigt nun eine perspektivische Ansicht des erfindungsgemäßen Stellantriebs, wie er z. B. bei schienengebundenen Fahrzeugen als aktiver hydraulischer Dämpfer eingesetzt werden kann.

Am Hydrozylinder 11 sind zylinderseitig eine erste Baugruppe 26 angebaut, welche das Hydraulikreservoir 3, den Elektromotor 2 sowie die Pumpen 6 und 4 umfasst. Auf der gegenüberliegenden Seite sind ebenfalls zylinderseitig die Steuerventile 7 und 5 angeordnet, welche eine zweite Baugruppe 27 bilden. Ein Verbindungselement 28 verbindet dabei die erste Baugruppe 26, den Hydrozylinder 1 und die zweite Baugruppe 27 sowohl mechanisch als auch hydraulisch. Die Hydraulikleitungen werden dabei von Bohrungen in dem Verbindungselement 28 gebildet, so dass weder Rohrleitungen noch Schläuche nötig sind und sich eine hohe hydraulische Steifigkeit und kurze Hydraulikwege ergeben.

Der erfindungsgemäße Stellantrieb weist eine zylinderseitige Anlenkung 24 und eine kolbenseitige Anlenkung 25 auf, mit welchen er am Einbauort mit den entsprechenden Elementen mechanisch verbunden wird. Dadurch, dass sämtliche Elemente des Hydrauliksystems in den Stellantrieb integriert sind, ergibt sich ein besonders einfacher Ein- und Ausbau, da lediglich diese mechanische Verbindung sowie die elektrischen Verbindungen gelöst werden müssen. Zudem bildet der erfindungsgemäße Stellantrieb eine kompakte und leichte Baueinheit, so dass er gerade als aktiver Dämpfer hervorragend geeignet ist. Dabei ist es oftmals sogar möglich, den erfindungsgemäßen aktiven Dämpfer im Einbauraum eines passiven Dämpfers zu integrieren, wodurch sich der aktive Dämpfer auch an bestehenden Fahrzeugen nachrüsten lässt.

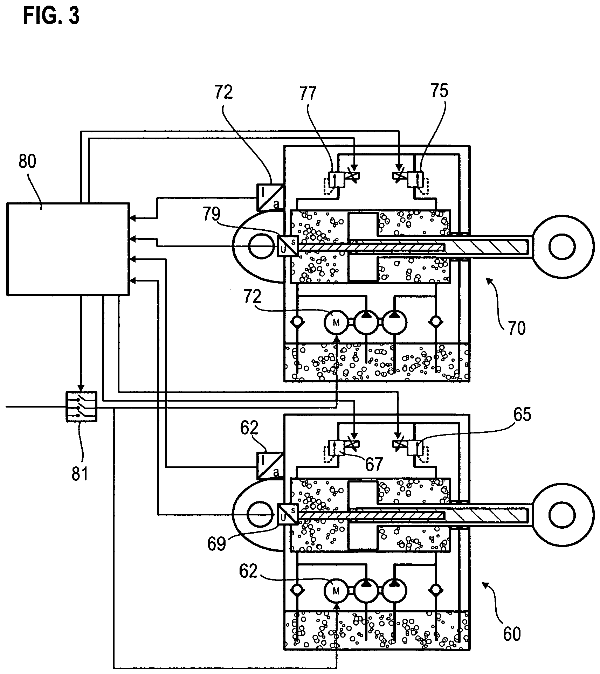

In Figur 3 ist nunmehr eine mögliche Systemanordnung zweier erfindungsgemäßer Stellantriebe für die Querzentrierung eines schienengebundenen Fahrzeugs dargestellt. Die Systemanordnung weist dabei einen ersten Stellantrieb 60 und einen zweiten Stellantrieb 70 auf, welche am Wagenkasten des schienengebundenen Fahrzeugs angeordnet sind und eine aktive Querdämpfung bilden. Dabei ist eine elektronische Steuerung 80 vorgesehen, welche die Steuerventile 67 und 65 des ersten Stellantriebs 60 sowie die Steuerventile 77 und 75 des zweiten Stellantriebs 70 ansteuert. Ebenso betätigt die Steuerelektronik 80 einen Schalter 81, über welchen die ungeregelten Motoren 62 bzw. 72 der Stellantriebe mit Drehstrom versorgt werden. Jeweils zylinderseitig sind am ersten und zweiten Stellantrieb Beschleunigungssensoren 62 und 72 vorgesehen, welche mit der Steuerelektronik 80 in Verbindung stehen. Ebenso sind Wegmessungssysteme 69 und 79 vorgesehen, welche ebenfalls mit der Steuerelektronik 80 in Verbindung stehen. Erfindungsgemäß ergibt sich damit durch die gezeigte Anordnung eine hochdynamische, kostengünstige und leicht zu wartende aktive Querdämpfung.

Durch die erfindungsgemäße Kraftregelung ergibt sich dabei der Vorteil, den Regelkreis einfach aufbauen zu können, da durch die Kraftregelung ein Kraftkonflikt zwischen dem ersten und dem zweiten Stellantrieb ausgeschlossen ist. Des weiteren ist es aufgrund der jeweils nur einseitigen Kraftwirkungsrichtung ausgeschlossen, dass die beiden Stellantriebe gegeneinander arbeiten, da immer eine Kolbenkammer Minimaldruck aufweist.

Im Vergleich zu andern hydraulischen Systemen weist der erfindungsgemäße Stellantrieb dabei enorme Vorteile bezüglich der Kosten, der Wartung, dem Gewicht und dem Energieverbrauch auf. Hierdurch ergeben sich neben der gezeigten Verwendung als aktiver hydraulischer Dämpfer weitere Einsatzmöglichkeiten zum Beispiel als zuverlässiger, kostengünstiger und kompakter Stellantrieb in Neigetechniksystemen.

## Patentansprüche

1. Hydraulischer Stellantrieb (60, 70), insbesondere als aktiver hydraulischer Dämpfer, insbesondere für schienengebundene Fahrzeuge, mit einem Hydrozylinder (1) mit einem Zylinderraum (9), der durch einen darin bewegbar angeordneten Kolben (12) in einen ersten Kolbenraum (10) und einen zweiten Kolbenraum (11) unterteilt ist,
einem Elektromotor (2), und
einem Hydraulikreservoir (3) zur Aufnahme eines Hydraulikfluids, wobei
alle Komponenten des hydraulischen Stellantriebs (60, 70) am Hydrozylinder (1) angeordnet sind,
**dadurch gekennzeichnet, dass**
der hydraulische Stellantrieb (60, 70) mit zwei Pumpen (4, 6) ausgerüstet ist, jeder Kolbenraum (10, 11) des Hydraulikzylinders mit je einer Pumpe (4, 6) verbunden ist,
die Kolbenräume (10, 11) jeweils einen getrennten Zufluss (13, 15) und einen getrennten Abfluss (14, 16) für das Hydraulikfluid aufweisen, und
der hydraulische Stellantrieb (60, 70) ferner zwei Steuerventile (5, 7) umfasst, wobei
ein erstes Steuerventil (7) dem ersten Kolbenraum (10) und ein zweites Steuerventil (5) dem zweiten Kolbenraum (11) zugeordnet ist, und
der Druck in jedem Kolbenraum (10 ,11) des Hydraulikzylinders unabhängig voneinander steuerbar ist.

2. Stellantrieb (60, 70) nach Anspruch 1, wobei die Steuerventile (5, 7) Druckregelventile sind.

3. Stellantrieb (60, 70) nach einem der vorhergehenden Ansprüche, wobei die Kolbenräume (10 ,11) mit einem jeweiligen Hydraulikkreislauf an einer Stelle zwischen der jeweiligen Pumpe (4, 6) und dem Steuerventil (5, 7) in Verbindung stehen.

4. Stellantrieb (60, 70) nach Anspruch 3, wobei der Zufluss (13, 15) jeweils mit der Pumpe (4, 6) und der Abfluss (14, 16) mit dem Steuerventil (5, 7) verbunden oder verbindbar ist.

5. Stellantrieb (60, 70) nach einem der vorangegangenen Ansprüche, wobei die Kolbenräume (10, 11) jeweils über ein Rückschlagventil (17, 18) mit dem Hydraulikreservoir (3) in Verbindung stehen.

6. Stellantrieb (60, 70) nach einem der vorangegangenen Ansprüche, wobei die Pumpen (4, 6) Konstantpumpen, insbesondere Zahnradpumpen mit konstantem Hubvolumen sind.

7. Stellantrieb (60, 70) nach einem der vorangegangenen Ansprüche, wobei der Elektromotor (2) zum Antrieb der Pumpen (4, 6) dient.

8. Stellantrieb (60, 70) nach Anspruch 7, wobei der Elektromotor (2) mit konstanter Drehzahl betrieben wird.

9. Stellantrieb (60, 70) nach Anspruch 7 oder 8, wobei der Elektromotor (2) ein ungeregelter Gleichstrommotor oder ein ungeregelter Drehstrom-Asynchronmotor ist.

10. Stellantrieb (60, 70) nach einem der vorangegangenen Ansprüche, wobei Drucksensoren zum Erfassen der Drücke in den Kolbenräumen (10, 11) vorgesehen sind.

11. Stellantrieb (60, 70) nach einem der vorangegangenen Ansprüche, mit einem integrierten Wegmesssystem (19).

12. Stellantrieb (60, 70) nach einem der vorangegangenen Ansprüche, mit einem Beschleunigungssensor (62, 72).

13. Stellantrieb (60, 70) nach einem der vorangegangenen Ansprüche, bei welchem während des Betriebs die Kolbenräume (10, 11) und/oder die Steuerventile (5, 7) permanent von Hydraulikfluid durchströmt werden.

14. Stellantrieb (60, 70) nach einem der vorangegangenen Ansprüche, bei welchem während des Betriebs immer mindestens einer der Kolbenräume (10, 11) auf Minimaldruck liegt.

15. Stellantrieb (60, 70) nach einem der vorangegangenen Ansprüche, bei welchem während des Betriebs immer maximal eines der beiden Steuerventile (5, 7) angesteuert wird.

16. Stellantrieb (60, 70) nach einem der vorangegangenen Ansprüche, mit einer Steuerung zur Ansteuerung des Stellantriebs (60, 70).

17. Stellantrieb (60, 70) nach einem der vorangegangenen Ansprüche, wobei der Hydrozylinder (1) ein zweistufiges Dichtungssystem mit einer Rücklaufentlastung (22) zwischen Primärdichtung (20) und Sekundärdichtung (21) aufweist.

18. Stellantrieb (60, 70) nach einem der vorangegangenen Ansprüche, wobei das Hydraulikreservoir (3) um die Kolbenräume (10, 11) des Hydrozylinders (1) angeordnet ist.

19. Stellantrieb (60, 70) nach einem der vorangegangenen Ansprüche, wobei der Antriebsmotor und/oder die Pumpen (4, 6) im Hydraulikreservoir (3) angeordnet sind.

20. Verwendung des hydraulischen Stellantriebs (60, 70) gemäß den Ansprüchen 1 bis 19 zur aktiven Dämpfung eines Fahrzeugs, insbesondere eines schienengebundenen Fahrzeugs.

21. Verwendung des hydraulischen Stellantriebs (60, 70) gemäß den Ansprüchen 1 bis 19 in einem Neigetechniksystem eines schienengebundenen Fahrzeugs.

## Claims

1. Hydraulic actuator (60, 70), in particular as active hydraulic damper, in particular for rail-bound vehicles, comprising a hydraulic cylinder (1) with a cylinder chamber (9) which is divided into a first piston chamber (10) and a second piston chamber (11) by a piston (12) movably arranged therein,
an electric motor (2), and
a hydraulic reservoir (3) for receiving a hydraulic fluid, wherein all components of the hydraulic actuator (60, 70) are arranged on the hydraulic cylinder (1),
**characterized in that**
the hydraulic actuator (60, 70) is equipped with two pumps (4, 6),
each piston chamber (10, 11) of the hydraulic cylinder is connected with one pump (4, 6) each,
the piston chambers (10, 11) each have a separate inlet (13, 15) and a separate outlet (14, 16) for the hydraulic fluid, and
the hydraulic actuator (60, 70) furthermore comprises two control valves (5, 7), wherein
a first control valve (7) is associated to the first piston chamber (10) and a second control valve (5) is associated to the second piston chamber (11), and
the pressure in each piston chamber (10, 11) of the hydraulic cylinder is independently controllable.

2. The actuator (60, 70) according to claim 1, wherein the control valves (5, 7) are pressure control valves.

3. The actuator (60, 70) according to any of the preceding claims, wherein the piston chambers (10, 11) are connected with a respective hydraulic circuit at a point between the respective pump (4, 6) and the control valve (5, 7).

4. The actuator (60, 70) according to claim 3, wherein the inlet (13, 15) each is connected or connectable with the pump (4, 6) and the outlet (14, 16) is connected or connectable with the control valve (5, 7).

5. The actuator (60, 70) according to any of the preceding claims, wherein the piston chambers (10, 11) each are connected with the hydraulic reservoir (3) via a check valve (17, 18).

6. The actuator (60, 70) according to any of the preceding claims, wherein the pumps (4, 6) are constant-displacement pumps, in particular gear pumps with constant swept volume.

7. The actuator (60, 70) according to any of the preceding claims, wherein the electric motor (2) serves to drive the pumps (4, 6).

8. The actuator (60, 70) according to claim 7, wherein the electric motor (2) is operated with constant speed.

9. The actuator (60, 70) according to claim 7 or 8, wherein the electric motor (2) is an uncontrolled d.c. motor or an uncontrolled three-phase asynchronous motor.

10. The actuator (60, 70) according to any of the preceding claims, wherein pressure sensors are provided for detecting the pressures in the piston chambers (10, 11).

11. The actuator (60, 70) according to any of the preceding claims, comprising an integrated path measuring system (19).

12. The actuator (60, 70) according to any of the preceding claims, comprising an acceleration sensor (62, 72).

13. The actuator (60, 70) according to any of the preceding claims, in which during operation the piston chambers (10, 11) and/or the control valves (5, 7) are permanently traversed by hydraulic fluid.

14. The actuator (60, 70) according to any of the preceding claims, in which during operation always at least one of the piston chambers (10, 11) is at minimum pressure.

15. The actuator (60, 70) according to any of the preceding claims, in which during operation always maximally one of the two control valves (5, 7) is activated.

16. The actuator (60, 70) according to any of the preceding claims, comprising a controller for activating the actuator (60, 70).

17. The actuator (60, 70) according to any of the preceding claims, wherein the hydraulic cylinder (1) includes a two-stage sealing system with a return flow relief (22) between primary seal (20) and secondary seal (21).

18. The actuator (60, 70) according to any of the preceding claims, wherein the hydraulic reservoir (3) is arranged around the piston chambers (10, 11) of the hydraulic cylinder (1).

19. The actuator (60, 70) according to any of the preceding claims, wherein the drive motor and/or the pumps (4, 6) are arranged in the hydraulic reservoir (3).

20. Use of the hydraulic actuator (60, 70) according to claims 1 to 19 for the active damping of a vehicle, in particular a rail-bound vehicle.

21. Use of a hydraulic actuator (60, 70) according to claims 1 to 19 in a tilting system of a rail-bound vehicle.

## Revendications

1. Actionneur hydraulique (60, 70), en particulier amortisseur hydraulique actif, en particulier pour véhicules ferroviaires, comportant un cylindre hydraulique (1) avec une chambre de cylindre (9) qui est divisée en une première chambre de piston (10) et une deuxième chambre de piston (11) par un piston (12) agencé mobile dans celle-ci,
un moteur électrique (2) et
un réservoir hydraulique (3) destiné à recevoir un fluide hydraulique, tous les composants de l'actionneur hydraulique (60, 70) étant agencés sur le cylindre hydraulique (1),
**caractérisé en ce que**
l'actionneur hydraulique (60, 70) est équipé de deux pompes (4, 6),
chaque chambre de piston (10, 11) du cylindre hydraulique est chacune reliée à une pompe (4, 6),
les chambres de piston (10, 11) présentent chacune une admission (13, 15) séparée et une évacuation (14, 16) séparée pour le fluide hydraulique, et l'actionneur hydraulique (60, 70) comprend en outre deux vannes de commande (5, 7), dans lequel
une première vanne de commande (7) est associée à la première chambre de piston (10) et une deuxième vanne de commande (5) est associée à la deuxième chambre de piston (11), et
la pression dans chaque chambre de piston (10, 11) du cylindre hydraulique peut être réglée indépendamment l'une de l'autre.

2. Actionneur (60, 70) selon la revendication 1, dans lequel les vannes de commande (5, 7) sont des vannes de régulation de pression.

3. Actionneur (60, 70) selon l'une quelconque des revendications précédentes, dans lequel les chambres de piston (10, 11) sont en liaison avec un circuit hydraulique respectif en un emplacement entre la pompe (4, 6) respective et la vanne de commande (5, 7).

4. Actionneur (60, 70) selon la revendication 3, dans lequel l'admission (13, 15) est ou peut être reliée à la pompe (4, 6) et l'évacuation (14, 16) est ou peut être reliée à la vanne de commande (5, 7).

5. Actionneur (60, 70) selon l'une quelconque des revendications précédentes, dans lequel les chambres de piston (10, 11) sont chacune en liaison avec le réservoir hydraulique (3) par un clapet anti-retour (17, 18).

6. Actionneur (60, 70) selon l'une quelconque des revendications précédentes, dans lequel les pompes (4, 6) sont des pompes à débit constant, en particulier des pompes à engrenage à cylindrée constante.

7. Actionneur (60, 70) selon l'une quelconque des revendications précédentes, dans lequel le moteur électrique (2) sert à l'entraînement des pompes (4, 6).

8. Actionneur (60, 70) selon la revendication 7, dans lequel le moteur électrique (2) fonctionne à un régime constant.

9. Actionneur (60, 70) selon la revendication 7 ou 8, dans lequel le moteur électrique (2) est un moteur à courant continu non régulé ou un moteur asynchrone triphasé non régulé.

10. Actionneur (60, 70) selon l'une quelconque des revendications précédentes, dans lequel des capteurs de pression sont prévus pour détecter les pressions dans les chambres de piston (10, 11).

11. Actionneur (60, 70) selon l'une quelconque des revendications précédentes, comportant un système de mesure de course (19) intégré.

12. Actionneur (60, 70) selon l'une quelconque des revendications précédentes, comportant un capteur d'accélération (62, 72).

13. Actionneur (60, 70) selon l'une quelconque des revendications précédentes, dans lequel pendant le fonctionnement les chambres de piston (10, 11) et/ou les vannes de commande (5, 7) sont traversées en permanence par du fluide hydraulique.

14. Actionneur (60, 70) selon l'une quelconque des revendications précédentes, dans lequel pendant le fonctionnement toujours au moins une des chambres de piston (10, 11) est sous pression minimum.

15. Actionneur (60, 70) selon l'une quelconque des revendications précédentes, dans lequel pendant le fonctionnement toujours au maximum une des deux vannes de commande (5, 7) est pilotée.

16. Actionneur (60, 70) selon l'une quelconque des revendications précédentes, comportant une commande pour piloter l'actionneur (60, 70).

17. Actionneur (60, 70) selon l'une quelconque des revendications précédentes, dans lequel le cylindre hydraulique (1) présente un système d'étanchéité à deux étages avec une décharge de retour (22) entre la garniture d'étanchéité primaire (20) et la garniture d'étanchéité secondaire (21).

18. Actionneur (60, 70) selon l'une quelconque des revendications précédentes, dans lequel le réservoir hydraulique (3) est agencé autour des chambres de piston (10, 11) du cylindre hydraulique (1).

19. Actionneur (60, 70) selon l'une quelconque des revendications précédentes, dans lequel le moteur d'entraînement et/ou les pompes (4, 6) est/sont agencé(es) dans le réservoir hydraulique (3).

20. Utilisation de l'actionneur hydraulique (60, 70) selon les revendications 1 à 19 pour l'amortissement actif d'un véhicule, en particulier d'un véhicule ferroviaire.

21. Utilisation de l'actionneur hydraulique (60, 70) selon les revendications 1 à 19 dans un système de technologie pendulaire d'un véhicule ferroviaire.
